# EUROPÄISCHE PATENTSCHRIFT

(11) **EP 2 792 025 B1**
(45) Veröffentlichungstag und Bekanntmachung des Hinweises auf die Patenterteilung: **25.07.2018**
(21) Anmeldenummer: 12783146.9
(22) Anmeldetag: 15.10.2012
(51) Int. Cl.: H01R 9/03, H01R 13/66, B60R 16/02

(54) **ELEKTRISCHE VERBINDUNGSSTRUKTUR MIT EINEM ELEKTRISCHEN STECKVERBINDER UND EINE DIESBEZÜGLICHE ELEKTRISCHE ANORDNUNG**
ELECTRICAL CONNECTING STRUCTURE COMPRISING AN ELECTRICAL PLUG CONNECTOR, AND AN ELECTRICAL ARRANGEMENT RELATING THERETO
STRUCTURE DE LIAISON ÉLECTRIQUE COMPORTANT UN CONNECTEUR ÉLECTRIQUE, AINSI QU'AGENCEMENT ÉLECTRIQUE CORRESPONDANT

(30) Priorität: 13.12.2011 DE 102011088333
(43) Veröffentlichungstag der Anmeldung: 22.10.2014
(73) Patentinhaber: Robert Bosch GmbH, 70442 Stuttgart (DE)
(72) Erfinder: HOFMEISTER, Werner, 75417 Muehlacker (DE); SAUR, Martin, 73084 Salach (DE); BAHR, Markus, 71332 Waiblingen (DE); LUX, Markus, 71364 Winnenden (DE)
(86) Internationale Anmeldenummer: PCT/EP2012/070361
(87) Internationale Veröffentlichungsnummer: WO 2013/087253

(56) Entgegenhaltungen:
- EP-A1- 0 971 442
- EP-A1- 2 081 260
- WO-A1-2007/107196
- DE-A1-102008 033 483
- JP-A- 2002 075 552
- US-A- 5 240 425
- US-A- 6 099 352
- US-A1- 2009 025 974

## Beschreibung

### Stand der Technik

Zum elektrischen Antrieb von modernen Kraftfahrzeugen, wie beispielsweise Hybrid-Fahrzeugen, ist es allgemein üblich, Gleichstrom einem Inverter zuzuführen und mit diesem den Gleichstrom in einem zumeist dreiphasigen Wechselstrom zu transformieren. Dieser Wechselstrom wird einem Antriebsmotor zugeführt. Da mittels der den Inverter mit dem Antriebsmotor verbindenden Leitungen hohe Ströme übertragen werden, besitzen diese meist einen Querschnitt zwischen 25 mm² und 50 mm². Da diese Kabel relativ dick sind, hat es sich bewährt, jede Phase getrennt mittels einer einzelnen elektrischen Leitung dem Antriebsmotor zuzuführen. Da der Inverter starke elektromagnetische Störungen in die Leitung induziert, wird jede Leitung einzeln mittels einer Schirmung gegen den Austritt der elektromagnetischen Störungen aus dem Kabel abgeschirmt. Es ist möglich, den Antriebsmotor mittels einer elektrischen Steckverbindung mit dem Inverter elektrisch leitfähig zu verbinden. Es ist auch üblich, die Schirmung jeder einzelnen Leitung steckbar mit dem an dem Antriebsmotor zu verbinden, wobei die Schirmungen dann innerhalb des Antriebsmotors elektrisch leitfähig miteinander verbunden werden. Allerdings hat sich gezeigt, dass aufgrund der elektromagnetischen Störung jede Schirmung während des Betriebs des Kraftfahrzeugs mit hohen Störströmen beaufschlagt wird. Aufgrund von Übergangswiderständen innerhalb der elektrischen Steckverbindung wird in Verbindung mit den hohen Stromstärken eine erhebliche Verlustleitung erzeugt, die ihrerseits zu einer erheblichen Erwärmung der Steckverbindung führt und dadurch die Steckverbindung unzulässig belasten kann. Um nun die elektrische Steckverbindung nicht zu überhitzen, wird meist die durch die elektrische Leitung übertragene Stromstärke entsprechend angepasst oder begrenzt.

Aus der JP 2002 075552 A ist eine Verbindungsstruktur für einen abgeschirmten Mehrpol-Steckverbinder bekannt.

Aus der EP 2 081 260 A1 ist ein Steckverbinder bekannt.

Aus der US 5 240 425 A ist ein weiterer elektrischer Steckverbinder bekannt.

Aus der EP 0 971 442 A1 ist ein weiterer elektrischer Steckverbinder bekannt.

Aus der US 6 099 352 A ist ein geschirmter Steckverbinder bekannt.

Aus der US 2009 / 0025974 A1 ist ein Abschirmgehäuse für elektrische Steckverbinder bekannt.

### Zusammenfassung der Erfindung

Es kann daher ein Bedürfnis bestehen, eine elektrische Verbindungsstruktur bereitzustellen, bei der die durch den Störstrom in der Schirmung verursachte Wärmeentwicklung in der elektrischen Steckverbindung reduziert ist.

Das Bedürfnis kann befriedigt werden durch den Gegenstand des unabhängigen Patentanspruchs 1. Weitere vorteilhafte Ausgestaltungen ergeben sich durch die abhängigen Patentansprüche. Erfindungsgemäß wird eine elektrische Verbindungsstruktur mit einem elektrischen Steckverbinder mit einem elektrisch isolierenden Steckergehäuse bereitgestellt. Die elektrische Verbindungsstruktur ist eingerichtet, den elektrischen Steckverbinder mit einem mit einem elektrischen Aggregat fest verbundenen elektrischen Gegensteckverbinder zur Übertragung hoher Ströme elektrisch leitfähig zu verbinden. Die Verbindungsstruktur weist eine erste elektrische Leitung auf, wobei die erste elektrische Leitung eingerichtet ist, einen ersten elektrischen Strom mit einer ersten Phasenlage zu übertragen. Die Verbindungsstruktur weist eine zweite elektrische Leitung auf, wobei die zweite elektrische Leitung eingerichtet ist, einen zweiten elektrischen Strom mit einer zweiten Phasenlage zu übertragen. Die erste Phasenlage und die zweite Phasenlage sind zeitlich gegeneinander verschoben. Die erste Leitung weist eine erste Schirmung gegen elektromagnetische Störungen auf. Die zweite Leitung weist eine zweite Schirmung gegen elektromagnetische Störungen auf. Die erste Schirmung ist mit einer in dem Gegensteckverbinder angeordneten dritten Schirmung lösbar elektrisch leitfähig verbindbar. Die zweite Schirmung ist mit einer in dem Gegensteckverbinder angeordneten vierten Schirmung lösbar elektrisch leitfähig verbindbar. Die erste Schirmung und die zweite Schirmung sind voneinander verschieden. Die erste Schirmung und die zweite Schirmung sind innerhalb der elektrischen Verbindungsstruktur miteinander elektrisch leitfähig verbunden.

Unter einem elektrischen Aggregat ist ein elektrischer Verbraucher oder eine elektrische Energiequelle zu verstehen. Die elektrischen Leitungen weisen erfindungsgemäß einen Querschnitt von 25 bis 50 mm² auf und sind für eine Übertragung von beispielsweise 150 A pro Leitung mit einem Querschnitt von 35 mm² eingerichtet. Elektromagnetische Störungen werden zum einen in den elektrischen Leiter durch den Inverter, auch Wechselrichter genannt, induziert. Zum anderen erzeugt der elektrische Leiter selbst aufgrund von magnetischer Induktion elektromagnetische Störungen. Der erste und der zweite elektrische Strom können beispielsweise ein durch eine Energiequelle bereitgestellter Wechselstrom sein. Auch kann der erste und der zweite Strom gepulster Gleichstrom sein, wobei der gepulste Gleichstrom durch einen Inverter und/oder durch wechselnden Leistungsbedarf von elektrischen Verbrauchern, wie beispielsweise Elektromotoren, erzeugt werden kann. Dementsprechend können elektromagnetische Störungen oder Störströme nicht nur in einer elektrisch leitfähigen Verbindung des Inverters mit einem elektrischen Verbraucher, sondern auch in einer elektrisch leitfähigen Verbindung des Inverters mit einer Gleichstromquelle wie beispielsweise einer Fahrzeugbatterie auftreten. Ein elektrisches Aggregat kann beispielsweise ein elektrischer Verbraucher, eine Batterie, ein DC-DC-Wandler oder auch ein Lademodul für die Batterie sein. Die Grundidee der Erfindung besteht nun darin, dass durch die elektrisch leitfähige Verbindung der ersten und der zweiten Schirmung innerhalb der elektrischen Verbindungsstruktur, wobei dies im elektrischen Steckverbinder oder zumindest in seiner Nähe erfolgt, die elektromagnetische Störung des ersten Leiters in die zweite Schirmung des zweiten elektrischen Leiters eingekoppelt wird und umgekehrt. Damit kann im Idealfall die von einer Störungsquelle, beispielsweise dem Inverter, erzeugte und entlang des ersten Leiters aufgrund der zeitlichen Phasenverschiebung, respektive der sich parallel zu dem ersten Leiter erstreckenden ersten Schirmung, zum elektrischen Steckverbinder, respektive dessen Steckergehäuse, geleitete elektromagnetische Störung in die zweite Schirmung eingekoppelt werden und entlang des zweiten Leiters, respektive der sich parallel zu dem zweiten Leiter erstreckenden zweiten Schirmung, zu der Störungsquelle zurückgeleitet werden. Damit würde der in der ersten Schirmung vorhandene Störstrom in der elektrischen Steckverbindung theoretisch keine Verlustleistung erzeugen, die zu einem Wärmeeintrag in die elektrische Steckverbindung, also den elektrischen Steckverbinder und/oder den elektrischen Gegensteckverbinder führen würde. Aufgrund von Abweichungen von dem Idealfall beispielsweise dadurch, dass die zeitliche Verschiebung der Phasen nicht exakt dem Anteil an 360° entspricht, dass an den Antriebsmotor zu übertragende Stromstärken wechseln oder dass Übergangswiderstände bei dem lösbaren Verbinden der einzelnen Schirmungen vorhanden sind, wird nicht der gesamte Störstrom der ersten Schirmung in die zweite Schirmung geleitet werden können, sondern es wird noch ein Teil dieses Störstroms durch das Steckergehäuse zu einer Masse des elektrischen Aggregats geleitet werden. Hierdurch ist die Verlustleistung wesentlich geringer als die Verlustleistung nach dem Stand der Technik. Die Gesamtwärme, mit der die elektrische Steckverbindung maximal beaufschlagt werden kann, setzt sich zusammen aus der Umgebungstemperatur, in der die elektrische Steckverbindung betrieben wird, der Erwärmung des elektrischen Leiters aufgrund der Stromstärken und der Erwärmung aufgrund der Verlustleistung in den Schirmen. Somit kann die gegenüber dem Stand der Technik eingesparte Wärme aufgrund der reduzierten Verlustleistung genutzt werden, um beispielsweise einen höheren Strom mittels des vorgegebenen elektrischen Leiters zu übertragen. Auch kann die gegenüber dem Stand der Technik eingesparte Wärme dazu benutzt werden, den elektrischen Steckverbinder bei einer höheren Umgebungstemperatur zu betreiben. In der Regel weist der elektrische Steckverbinder ein Steckergehäuse auf, das aus elektrisch nicht-leitfähigem Kunststoff gefertigt ist. Erfindungsgemäß sind die erste Schirmung und die zweite Schirmung außerhalb des elektrischen Steckverbinders miteinander elektrisch leitfähig verbunden.

Somit wird der Großteil des durch den Inverter verursachten und in die Schirmung des elektrischen Leiters induzierten Störstromes nicht durch den elektrischen Steckverbinder hindurch geleitet. Lediglich ein kleiner Teil des Störstromes wird in das elektrische Aggregat geleitet. Die Verlustleistung in Form von Wärme in der Steckverbindung wird dadurch deutlich reduziert.

Gemäß einem Ausgestaltungsbeispiel der Erfindung sind die erste Schirmung und die zweite Schirmung nahe ihrem Eintritt in den elektrischen Steckverbinder miteinander elektrisch leitfähig verbunden.

Durch die Nähe der elektrisch leitfähigen Verbindung der ersten Schirmung und der zweiten Schirmung zu dem elektrischen Steckverbinder können durch die zwischen der elektrisch leitfähigen Verbindung und elektrischem Steckverbinder verbliebenen Teil der elektrischen Leitung nahezu keine elektromagnetischen Störströme in die Schirmung des elektrischen Steckverbinders induziert werden.

Gemäß einem nicht zur Erfindung gehörenden Beispiel sind die erste Schirmung und die zweite Schirmung innerhalb des elektrischen Steckverbinders miteinander elektrisch leitfähig verbunden.

Durch eine derartige konstruktive Ausgestaltung kann beispielsweise in einfacher Weise die erste Schirmung und die zweite Schirmung miteinander elektrisch leitfähig verbunden werden.

Gemäß einem weiteren Ausgestaltungsbeispiel der Erfindung wird eine elektrische Anordnung mit einer im Vorhergehenden beschriebenen elektrischen Verbindungsstruktur bereitgestellt. Durch die elektrische Verbindungsstruktur sind ein Inverter und ein elektrisches Aggregat miteinander elektrisch leitfähig verbunden.

Gemäß einem weiteren Ausgestaltungsbeispiel der Erfindung weist die elektrische Verbindungsstruktur der elektrischen Anordnung einen ersten elektrischen Steckverbinder mit einem ersten elektrisch isolierenden Steckergehäuse und einen zweiten elektrischen Steckverbinder mit einem zweiten elektrisch isolierenden Steckergehäuse auf. Der erste elektrische Steckverbinder ist mit dem elektrischen Aggregat elektrisch leitfähig verbunden. Der zweite elektrische Steckverbinder ist mit dem Inverter elektrisch leitfähig verbunden. Die erste Schirmung und die zweite Schirmung sind zweimal miteinander elektrisch leitfähig verbunden.

Die elektrisch leitfähige Verbindung kann beim ersten Steckverbinder innerhalb oder außerhalb des Steckergehäuses und beim zweiten Steckverbinder ebenfalls innerhalb oder außerhalb an dessen Steckergehäuse erfolgen. Wenn die elektrisch leitfähige Verbindung des ersten Schirms und des zweiten Schirms miteinander außerhalb des Steckergehäuses erfolgt, dann wird jede elektrisch leitfähige Verbindung nahe dem Eintritt der Leitungen in den jeweiligen Steckverbinder angeordnet sein.

Gemäß einem weiteren Ausgestaltungsbeispiel der Erfindung wird ein Kraftfahrzeug mit einer im Vorhergehenden beschriebenen elektrischen Anordnung bereitgestellt.

Es wird angemerkt, dass Gedanken zu der Erfindung hierin im Zusammenhang mit einer elektrischen Verbindungsstruktur, einer elektrischen Anordnung mit einer diesbezüglichen Verbindungsstruktur und einem Kraftfahrzeug mit einer elektrischen Anordnung beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu gelangen.

### Kurze Beschreibung der Zeichnungen

Ausführungsformen der Erfindung werden nachfolgend mit Bezug auf die beigefügten Figuren beschrieben. Die Figuren sind lediglich schematisch und nicht maßstabsgetreu.
- Figur 1: zeigt eine mit einem elektrischen Verbraucher verbundene elektrische Verbindungsstruktur nach dem Stand der Technik in einem Längsschnitt;
- Figur 2: zeigt die aus Figur 1 bekannte Schirmung als elektrisches Ersatzschaltbild;
- Figur 3: zeigt eine erste Variante einer elektrischen Verbindungsstruktur in einem Längsschnitt;
- Figur 4: zeigt die erste Variante der mit dem elektrischen Verbraucher verbundenen elektrischen Verbindungsstruktur in einem Längsschnitt;
- Figur 5: zeigt die aus Figur 4 bekannte Schirmung als elektrisches Ersatzschaltbild;
- Figur 6: zeigt eine zweite Variante der mit dem elektrischen Verbraucher verbundenen elektrischen Verbindungsstruktur in einem Längsschnitt;
- Figur 7: zeigt die aus Figur 6 bekannte Schirmung als elektrisches Ersatzschaltbild; und
- Figur 8: zeigt ein Kraftfahrzeug mit einer Gleichstromquelle, einem Inverter und einem Antriebsmotor sowie einer den Inverter und den Antriebsmotor verbindenden elektrischen Verbindungsstruktur.

### Detaillierte Beschreibung beispielhafter Ausführungsformen

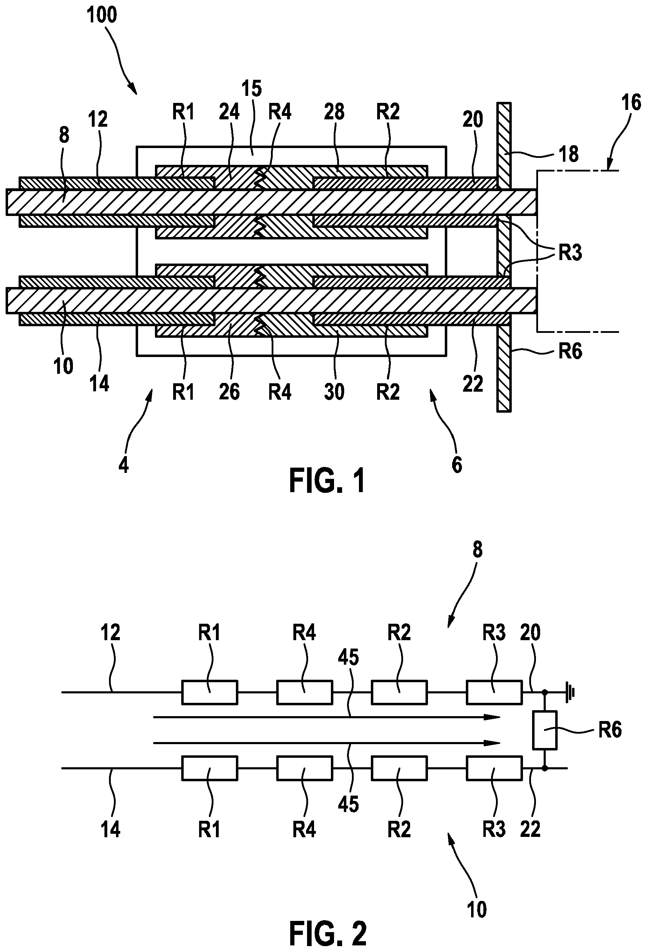

Figur 1 zeigt eine elektrische Verbindungsstruktur 100 nach dem Stand der Technik. Hierbei besitzt die elektrische Verbindungsstruktur 100 einen elektrischen Steckverbinder 4 mit einem elektrisch isolierten Steckergehäuse 15, welcher mit einem elektrischen Gegensteckverbinder 6 lösbar verbunden ist. Die Verbindungsstruktur 100 besitzt eine erste elektrische Leitung 8, wobei die erste elektrische Leitung 8 eingerichtet ist, einen ersten elektrischen Strom mit einer ersten Phasenlage zu übertragen. Die Verbindungsstruktur 100 besitzt weiterhin eine zweite elektrische Leitung 10, die eingerichtet ist, einen zweiten elektrischen Strom mit einer zweiten Phasenlage zu übertragen. Hierbei ist die erste Phasenlage und die zweite Phasenlage zeitlich gegeneinander verschoben. Die erste Leitung 8 besitzt eine erste Schirmung 12 gegen elektromagnetische Störungen. Die zweite Leitung 10 besitzt eine zweite Schirmung 14 gegen elektromagnetische Störungen. Die erste elektrische Leitung 8 und die zweite elektrische Leitung 10 sind einem elektrischen Aggregat 16, welches als elektrischer Verbraucher ausgestaltet ist, zugeführt. Mittels dieser beiden elektrischen Leitungen 8, 10 wird das elektrische Aggregat 16 mit elektrischer Energie versorgt. Das elektrische Aggregat 16 ist von einem elektrisch leitfähigen Aggregatsgehäuse 18 umgeben. Mit dem Aggregatsgehäuse 18 elektrisch leitfähig verbunden sind eine dritte Schirmung 20 und eine vierte Schirmung 22. Die dritte Schirmung 20 und die vierte Schirmung 22 sind in den elektrischen Gegensteckverbinder 6 geführt. Der elektrische Gegensteckverbinder 6 kann hierbei fest mit dem Aggregatsgehäuse 18 verbunden sein. In der elektrischen Steckverbinder 4-Gegensteckverbinder 6-Kombination sind die erste Schirmung 12 mit der dritten Schirmung 20 und die zweite Schirmung 14 mit der vierten Schirmung 22 elektrisch leitfähig verbunden. Hierzu sind die erste Schirmung 12 mit einem ersten Schirmbauteil 24 und die zweite Schirmung 14 mit einem zweiten Schirmbauteil 26 elektrisch leitfähig verbunden, wobei das erste 24 und das zweite Schirmbauteil 26 Bestandteil des elektrischen Steckverbinders 4 sind. Die dritte Schirmung 20 ist mit einem dritten Schirmbauteil 28 und die vierte Schirmung 22 ist mit einem vierten Schirmbauteil 30 elektrisch leitfähig verbunden. Hierbei sind das dritte 28 und das vierte Schirmbauteil 30 Bestandteil des elektrischen Gegensteckverbinders 6. Somit ist das erste Schirmbauteil 24 an das dritte Schirmbauteil 28 und das zweite Schirmbauteil 26 an das vierte Schirmbauteil 30 jeweils elektrisch leitfähig und lösbar aneinander verbunden. Von der ersten Schirmung 12 zu dem ersten Schirmbauteil 24, respektive von der zweiten Schirmung 14 zu dem zweiten Schirmbauteil 26, ist jeweils ein erster Übergangswiderstand R1 vorhanden. Von der dritten Schirmung 20 zu dem dritten Schirmbauteil 28, respektive von der vierten Schirmung 22 zu dem vierten Schirmbauteil 30, ist jeweils ein zweiter Übergangswiderstand R2 vorhanden. Ferner besteht von dem Aggregatsgehäuse 18 zu der dritten 20, respektive zu der vierten Schirmung 22, jeweils ein dritter Übergangswiderstand R3. Ferner besteht an einem Übergang des ersten 24 zu dem dritten Schirmbauteil 28, respektive des zweiten 26 zu dem vierten Schirmbauteil 30, jeweils ein vierter Übergangswiderstand R4. Ferner besitzt das Aggregatsgehäuse 18 einen Widerstand R6. Die elektrischen Leitungen 8, 10 besitzen in dem hier dargestellten aus dem Stand der Technik bekannten Beispiel einen Querschnitt von 35 mm² und werden mit etwa 150 A je Leitung beaufschlagt. Der Strom wird durch einen hier nicht dargestellten Inverter in die beiden Leitungen 8, 10 eingespeist. Hierbei erzeugt der Inverter elektromagnetische Störungen, die ebenfalls in die Schirmungen 12, 14 induziert werden. Aufgrund dieser Induktion sowie durch die hohen Ströme in den Leitungen, die magnetische Störungen in die Schirmungen 12, 14, 20, 22 induzieren, können in der Summe bis zu 70 A Störstrom in die Schirmungen 12, 14, 20, 22 induziert werden.

Figur 2 zeigt die aus Figur 1 bekannte Schirmung als elektrisches Ersatzschaltbild. Hierbei ist das Aggregatsgehäuse 18 als Masse dargestellt. Ersichtlich ist, dass sowohl für die erste 12 und die dritte Schirmung 20 als auch für die zweite 14 und die vierte Schirmung 22 die Übergangswiderstände R1, R2, R3, R4 jeweils in Reihe geschaltet sind.

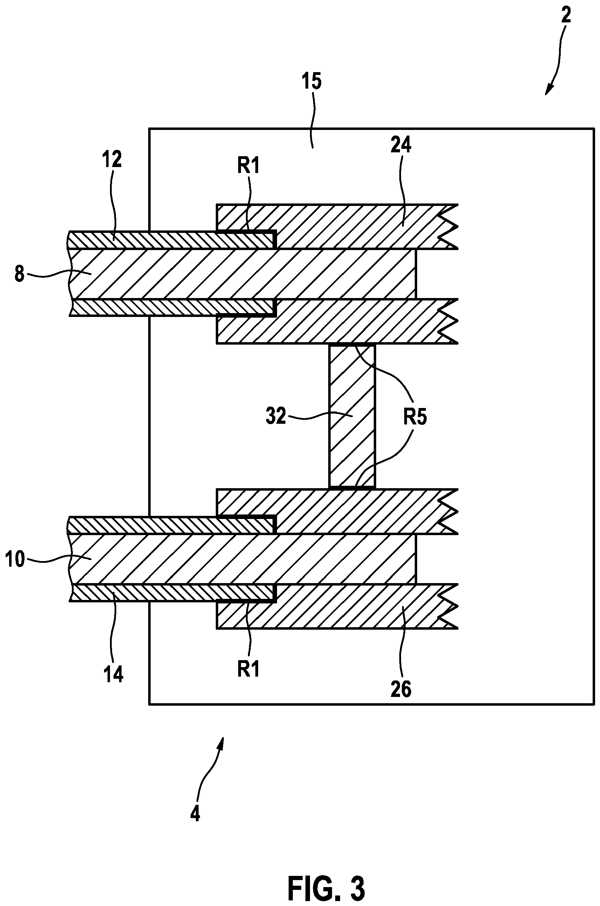

Figur 3 zeigt nun eine erste, nicht zur Erfindung gehörenden Variante einer elektrischen Verbindungsstruktur 2.

Hierbei unterscheidet sich der hier dargestellte elektrische Steckverbinder 4 von dem in der Figur 1 dargestellten, dass das erste Schirmbauteil 24 und das zweite Schirmbauteil 26 innerhalb des elektrischen Steckverbinders 4 mittels der Verbindung 32 elektrisch leitend miteinander verbunden sind. Zwischen der Verbindung 32 und der ersten 12, respektive der zweiten Schirmung 14, ergibt sich jeweils ein fünfter Übergangswiderstand R5.

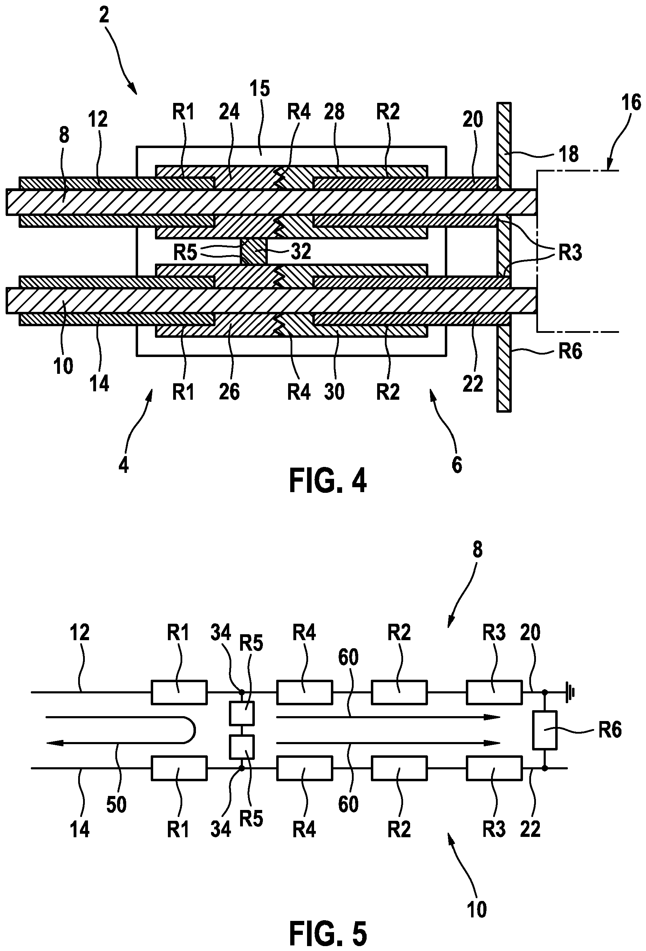

Figur 4 zeigt die Darstellung der Figur 1, in der der Steckverbinder 4 durch den aus der Figur 3 bekannten Steckverbinder 4 ersetzt wurde. Dementsprechend ist das erste Schirmbauteil 24 und das zweite Schirmbauteil 26 mittels der Verbindung 32 elektrisch leitfähig verbunden.

Figur 5 zeigt die aus der Figur 4 bekannte Schirmung als elektrisches Ersatzschaltbild. Deutlich sichtbar ist, dass hier zwei Strompfade 50, 60 abgebildet sind. Der erste Strompfad 50 führt von der ersten Schirmung 12 über den Übergangswiderstand R1 an einem Abzweig 34 in die zwei Übergangswiderstände R5, und von dort in den ersten Übergangswiderstand R1 in die zweite Schirmung 14 führt. Von dem Abzweig 34 besteht ein zweiter Strompfad 60 für den ersten Leiter 8, der in den vierten Übergangswiderstand R4, von dort in den zweiten Übergangswiderstand R2, von dort in den dritten Übergangswiderstand R3 und von dort in die dritte Schirmung 20 führt. Wie bereits ausgeführt, werden in der ersten Schirmung 12 Ströme bis beispielsweise 70 A induziert. Damit fließt in dem ersten Strompfad 50 der Strom in Höhe von den 70 A. Durch elektrische Unsymmetrien wird der zweite Strompfad 60, der von dem Abzweig in den vierten Übergangswiderstand R4 sowie die weiteren Übergangswiderstände R2 und R3 führt, mit deutliche geringeren Strömen von beispielsweise etwa 5 A beaufschlagt. Der zweite Strompfad ist für jede elektrische Leitung 8, 10 vorhanden und damit in dem hier beschriebenen nicht zur Erfindung gehörenden Beispiel zweimal. Somit kann die in der hier dargestellten Kombination aus elektrischem Steckverbinder 4 und elektrischem Gegensteckverbinder 6 anfallende gesamte Verlustleistung für den ersten 50 und den zweiten Strompfad 60 berechnet werden. In dem Strompfad 60 entsteht aufgrund der deutlich geringeren Stromstärken eine ebenfalls deutlich reduzierte Verlustleistung gegenüber der in der elektrischen Verbindungsstruktur 100 nach dem Stand der Technik auftretende Gesamtverlustleistung.

Hierdurch wird deutlich, dass durch die Schaffung von zwei Strompfaden 50, 60 der durch die Schirmung 12 in die elektrische Steckverbinder 4-Gegensteckverbinder 6-Kombination eingeleitete Störstrom nahezu verlustfrei über die dritte Schirmung 14 aus der elektrischen Steckverbinder 4-Gegensteckverbinder 6-Kombination ausgeleitet wird. Es können die in der ersten Schirmung 12 ankommenden elektrisch induzierten Störströme mittels der zweiten Schirmung 14 zurück an einen Erzeuger geleitet werden.

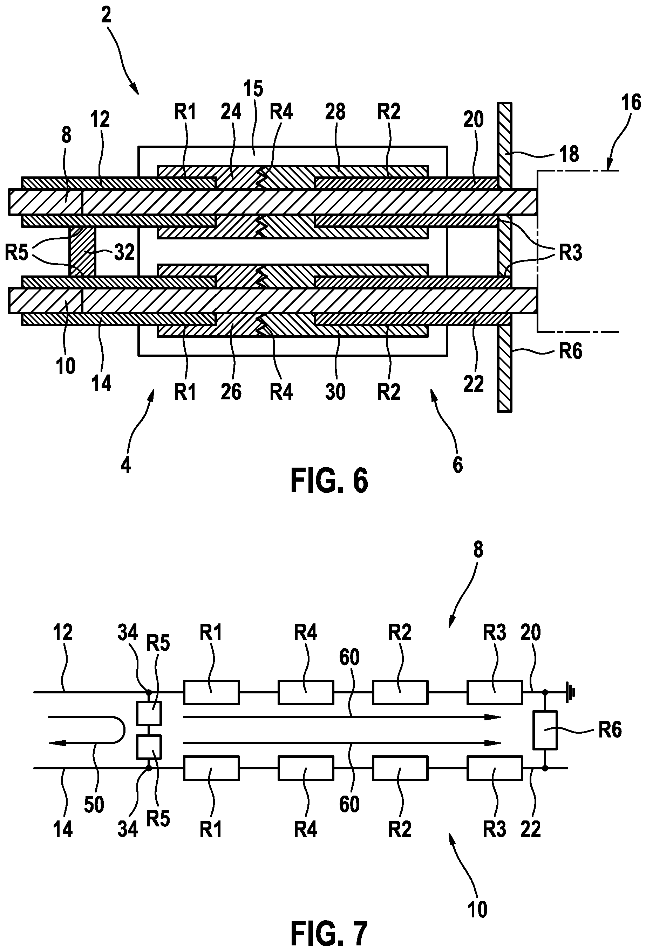

Figur 6 unterscheidet sich von der Figur 4 dadurch, dass nunmehr die elektrisch leitfähige Verbindung 32 zwischen der ersten Schirmung 12 und der zweiten Schirmung 14 bereits nahe ihrem Eintritt in die elektrische Steckverbinder 4-Gegensteckverbinder 6-Kombination erfolgt.

In Figur 7 ist die aus Figur 6 bekannte Schirmung als elektrisches Ersatzschaltbild dargestellt. Entsprechend erfolgt der Abzweig 34 bereits vor dem ersten Übergangswiderstand R1.

Entsprechend der vorhergehenden Beschreibung existieren auch hier zwei Strompfade 50, 60. Da jedoch der erste Strompfad 50, bestehend aus im Wesentlichen den beiden fünften Übergangswiderständen R5, außerhalb der elektrischen Steckverbinder 4-Gegensteckverbinder 6-Kombination liegt, liefert der erste Strompfad 50 keinen Beitrag für eine Verlustleistung innerhalb der Steckverbinder 4-Gegensteckverbinder 6-Kombination. Wie bereits beschrieben, werden ab dem Abzweig 34 die Übergangswiderstände R1, R4, R2 und R3 lediglich mit einer deutlich geringeren Stromstärke von beispielsweise etwa 5 A beaufschlagt. Entsprechend reduziert sich die in der Steckverbinder 4-Gegensteckverbinder 6-Kombination entstehende Verlustleistung gegenüber der nach dem Stand der Technik bekannten Verlustleistung.

Da die Verlustleistungen auch zu einer Erwärmung der elektrischen Steckverbinder 4-Gegensteckverbinder 6-Kombination führen, wird bei einer entsprechend geringeren Verlustleistung auch diese Steckverbinder 4-Gegensteckverbinder 6-Kombination geringer erwärmt. Wenn man nun annimmt, dass die Steckverbinder 4-Gegensteckverbinder 6-Kombination bei einer vorbestimmten Temperatur betrieben werden kann, so kann die durch die geringere Verlustleistung erzeugte geringere Wärme dazu genutzt werden, um beispielsweise die durch die elektrischen Leitungen 8, 10 übertragenen Stromstärken zu erhöhen. Auch kann der durch die Verlustleistung erzeugte geringere Wärmeeintrag dazu genutzt werden, um die elektrische Steckverbinder 4-Gegensteckverbinder 6-Kombination bei einer höheren Umgebungstemperatur zu betreiben.

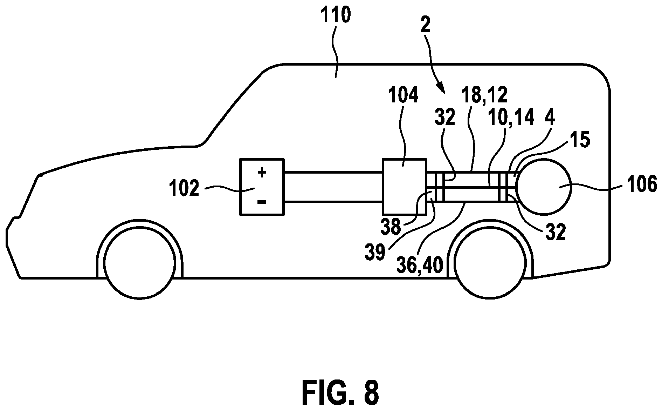

Figur 8 zeigt ein Kraftfahrzeug 110. Hierbei ist eine Gleichspannungsquelle 102 mit einem Inverter 104 elektrisch leitfähig verbunden. Mittels des Inverters 104 wird Gleichstrom in dem hier vorliegenden Ausführungsbeispiel in einen dreiphasigen Wechselstrom umgerichtet. Dieser dreiphasige Wechselstrom wird mittels der elektrischen Verbindungsstruktur 2 einem Asynchronmotor 106 zugeführt, welcher das Kraftfahrzeug 110 antreibt. Die elektrische Verbindungsstruktur 2 besitzt neben der ersten Leitung 6 und der zweiten Leitung 8 eine dritte Leitung 36. Ferner besitzt die elektrische Verbindungsstruktur 2 einen zweiten elektrischen Steckverbinder 38 mit einem zweiten elektrisch isolierenden Steckergehäuse 39, mittels dem die elektrische Verbindungsstruktur 2 an den Inverter 104 elektrisch leitfähig lösbar verbunden ist. Neben der ersten 12 und der zweiten Schirmung 14 besitzt auch die dritte elektrische Leitung 36 eine dritte Schirmung 40. Sowohl innerhalb des ersten Steckverbinders 4 als auch innerhalb des zweiten elektrischen Steckverbinders 38 sind die Schirmungen 12, 14, 40 miteinander mittels der Verbindung 32 elektrisch leitfähig miteinander verbunden. Diese elektrische Verbindungsstruktur 2 kann auch zur Verbindung des Inverters 104 mit der Gleichstromquelle 102 verwendet werden.

## Patentansprüche

1. Elektrische Verbindungsstruktur mit einem elektrischen Steckverbinder (4) mit einem elektrisch isolierenden Steckergehäuse (15), wobei die elektrische Verbindungsstruktur eingerichtet ist, den elektrischen Steckverbinder (4) mit einem mit einem elektrischen Aggregat (16) fest verbundenen elektrischen Gegensteckverbinder (6) zur Übertragung hoher Ströme elektrisch leitfähig zu verbinden,
wobei die Verbindungsstruktur (2) eine erste elektrische Leitung (8) aufweist, wobei die erste elektrische Leitung (8) eingerichtet ist, einen ersten elektrischen Strom mit einer ersten Phasenlage zu übertragen, wobei die Verbindungsstruktur (2) eine zweite elektrische Leitung (10) aufweist, wobei die zweite elektrische Leitung (10) eingerichtet ist, einen zweiten elektrischen Strom mit einer zweiten Phasenlage zu übertragen, wobei die erste Phasenlage und die zweite Phasenlage zeitlich gegeneinander verschoben sind,
wobei die erste Leitung (8) eine erste Schirmung (12) gegen elektromagnetische Störungen aufweist,
wobei die zweite Leitung (10) eine zweite Schirmung (14) gegen elektromagnetische Störungen aufweist,
wobei die erste Schirmung (12) mit einer in dem Gegensteckverbinder (6) angeordneten dritten Schirmung (20) lösbar elektrisch leitfähig verbindbar ist,
wobei die zweite Schirmung (14) mit einer in dem Gegensteckverbinder (6) angeordneten vierten Schirmung (22) lösbar elektrisch leitfähig verbindbar ist,
wobei die erste elektrische Leitung (8) und die zweite elektrische Leitung (10) jeweils einen Querschnitt von 25 bis 50 mm² aufweisen,
die erste Schirmung (12) und die zweite Schirmung (14) voneinander verschieden sind,
die erste Schirmung (12) und die zweite Schirmung (14) innerhalb der elektrischen Verbindungsstruktur (2) miteinander elektrisch leitfähig verbunden sind,
**dadurch gekennzeichnet, dass**
die erste Schirmung (12) und die zweite Schirmung (14) außerhalb des elektrischen Steckverbinders (4) miteinander elektrisch leitfähig verbunden sind.

2. Elektrische Verbindungsstruktur nach Anspruch 1,
**dadurch gekennzeichnet, dass**
die erste Schirmung (12) und die zweite Schirmung (14) nahe ihrem Eintritt in den elektrischen Steckverbinder (4) miteinander elektrisch leitfähig verbunden sind.

3. Elektrische Anordnung mit einer elektrischen Verbindungsstruktur nach einem der Ansprüche 1 oder 2, einem Inverter (104) und einem elektrischen
Aggregat (106),
**dadurch gekennzeichnet, dass**
durch die elektrische Verbindungsstruktur (2) der Inverter (104) und das elektrische Aggregat (106) miteinander elektrisch leitfähig verbunden sind.

4. Elektrische Anordnung nach Anspruch 3, **dadurch gekennzeichnet, dass**
die elektrische Verbindungsstruktur (2) einen ersten elektrischen Steckverbinder (4) mit einem ersten elektrisch isolierenden Steckergehäuse (15) und einen zweiten elektrischen Steckverbinder (38) mit einem zweiten elektrisch isolierenden Steckergehäuse (39) aufweist,
wobei der erste elektrische Steckverbinder (4) mit dem elektrischen Aggregat (106) elektrisch leitfähig verbunden ist,
wobei der zweite elektrische Steckverbinder (38) mit dem Inverter (104) elektrisch leitfähig verbunden ist,
wobei die erste Schirmung (12) und die zweite Schirmung (14) zweimal miteinander elektrisch leitfähig verbunden sind.

5. Kraftfahrzeug mit einer elektrischen Anordnung nach einem der Ansprüche 3 oder 4.

## Claims

1. Electrical connecting structure comprising an electrical plug-in connector (4) with an electrically insulating plug housing (15), wherein the electrical connecting structure is designed to electrically conductively connect the electrical plug-in connector (4) to an electrical mating plug-in connector (6), which is fixedly connected to an electrical assembly (16), for the purpose of transmitting high currents, wherein the connecting structure (2) has a first electrical line (8), wherein the first electrical line (8) is designed to transmit a first electric current with a first phase angle,
wherein the connecting structure (2) has a second electrical line (10), wherein the second electrical line (10) is designed to transmit a second electric current with a second phase angle,
wherein the first phase angle and the second phase angle are shifted in relation to one another with respect to time,
wherein the first line (8) has a first shield (12) against electromagnetic interference,
wherein the second line (10) has a second shield (14) against electromagnetic interference,
wherein the first shield (12) can be electrically conductively connected in a releasable manner to a third shield (20) which is arranged in the mating plug-in connector (6),
wherein the second shield (14) can be electrically conductively connected in a releasable manner to a fourth shield (22) which is arranged in the mating plug-in connector (6),
wherein the first electrical line (8) and the second electrical line (10) each have a cross section of from 25 to 50 mm²,
the first shield (12) and the second shield (14) are different from one another,
the first shield (12) and the second shield (14) are electrically conductively connected to one another within the electrical connecting structure (2), **characterized in that**
the first shield (12) and the second shield (14) are electrically conductively connected to one another outside the electrical plug-in connector (4).

2. Electrical connecting structure according to Claim 1,
**characterized in that**
the first shield (12) and the second shield (14) are electrically conductively connected to one another close to their inlet into the electrical plug-in connector (4).

3. Electrical arrangement comprising an electrical connecting structure according to either of Claims 1 and 2, an inverter (104) and an electrical assembly (106),
**characterized in that**
the inverter (104) and the electrical assembly (106) are electrically conductively connected to one another by the electrical connecting structure (2).

4. Electrical arrangement according to Claim 3,
**characterized in that**
the electrical connecting structure (2) has a first electrical plug-in connector (4) with a first electrically insulating plug housing (15) and has a second electrical plug-in connector (38) with a second electrically insulating plug housing (39),
wherein the first electrical plug-in connector (4) is electrically conductively connected to the electrical assembly (106),
wherein the second electrical plug-in connector (38) is electrically conductively connected to the inverter (104),
wherein the first shield (12) and the second shield (14) are electrically conductively connected to one another twice.

5. Motor vehicle comprising an electrical arrangement according to either of Claims 3 and 4.

## Revendications

1. Structure de liaison électrique comprenant une fiche de connexion électrique (4) munie d'un boîtier de fiche (15) électriquement isolant, la structure de liaison électrique étant conçue pour relier de manière électriquement conductrice la fiche de connexion électrique (4) à une fiche de connexion électrique homologue (6) reliée à demeure à un groupe électrique (16) afin de transmettre des courants forts,
la structure de liaison (2) possédant une première ligne électrique (8), la première ligne électrique (8) étant conçue pour transmettre un premier courant électrique ayant une première position de phase,
la structure de liaison (2) possédant une deuxième ligne électrique (10), la deuxième ligne électrique (10) étant conçue pour transmettre un deuxième courant électrique ayant une deuxième position de phase,
la première position de phase et la deuxième position de phase étant décalées dans le temps l'une par rapport à l'autre,
la première ligne (8) possédant un premier blindage (12) de protection contre les perturbations électromagnétiques,
la deuxième ligne (10) possédant un deuxième blindage (14) de protection contre les perturbations électromagnétiques,
le premier blindage (12) pouvant être relié de manière électriquement conductrice et amovible a un troisième blindage (20) disposé dans la fiche de connexion homologue (6),
le deuxième blindage (14) pouvant être relié de manière électriquement conductrice et amovible a un quatrième blindage (22) disposé dans la fiche de connexion homologue (6),
la première ligne (8) électrique et la deuxième ligne (10) électrique possédant respectivement une section de 25 à 50 mm²,
le premier blindage (12) et le deuxième blindage (14) étant différents l'un de l'autre,
le premier blindage (12) et le deuxième blindage (14) étant reliés de manière électriquement conductrice entre eux à l'intérieur de la structure de liaison électrique (2),
**caractérisée en ce que**
le premier blindage (12) et le deuxième blindage (14) sont reliés de manière électriquement conductrice entre eux à l'extérieur de la fiche de connexion électrique (4) .

2. Structure de liaison électrique selon la revendication 1, **caractérisée en ce que** le premier blindage (12) et le deuxième blindage (14) sont reliés de manière électriquement conductrice entre eux à proximité de leur entrée dans la fiche de connexion électrique (4).

3. Arrangement électrique comprenant une structure de liaison électrique selon l'une des revendications 1 ou 2, un onduleur (104) et un groupe électrique (106), **caractérisé en ce que** l'onduleur (104) et le groupe électrique (106) sont reliés de manière électriquement conductrice entre eux par la structure de liaison électrique (2).

4. Arrangement électrique selon la revendication 3, **caractérisé en ce que** la structure de liaison électrique (2) possède une première fiche de connexion électrique (4) munie d'un premier boîtier de fiche (15) électriquement isolant et une deuxième fiche de connexion électrique (38) munie d'un deuxième boîtier de fiche (39) électriquement isolant,
la première fiche de connexion électrique (4) étant reliée de manière électriquement conductrice au groupe électrique (106),
la deuxième fiche de connexion électrique (38) étant reliée de manière électriquement conductrice à l'onduleur (104),
le premier blindage (12) et le deuxième blindage (14) étant reliés deux fois de manière électriquement conductrice entre eux.

5. Véhicule automobile comprenant un arrangement électrique selon l'une des revendications 3 ou 4.
